**Europäisches Patentamt**

**European Patent Office**

**Office européen des brevets**

(19)

(11) Veröffentlichungsnummer: **0 204 173**
**A1**

(12) # EUROPÄISCHE PATENTANMELDUNG

(21) Anmeldenummer: **86106324.6**

(22) Anmeldetag: **09.05.86**

(51) Int. Cl.⁴: **A 01 D 34/08**
**A 01 B 69/00, G 05 G 11/00**

(30) Priorität: **31.05.85 CH 2314/85**

(43) Veröffentlichungstag der Anmeldung:
**10.12.86 Patentblatt 86/50**

(84) Benannte Vertragsstaaten:
**AT CH DE FR IT LI**

(71) Anmelder: **Rapid Maschinen und Fahrzeuge AG**
**Helmstrasse 7**
**8953 Dietikon(CH)**

(72) Erfinder: **Meier, Daniel**
**Grendelstrasse 18**
**CH-5400 Ennetbaden(CH)**

(74) Vertreter: **Troesch, Hans Alfred, Dr. Ing. et al,**
**Walchestrasse 19**
**CH-8035 Zürich(CH)**

(54) **Motor-Handmäher.**

(57) Der Motor-Handmäher mt Hydrostatantrieb (13), dessen Lenkrahmen (3) mittels zweier Handgriffe (4, 5) geführt ist, hat ein auf den Hydrostatantrieb (13) wirkendes Hand-Schaltorgan (8) mit den Stellungen "Vorwärts-Null-Rückwärts" ausserhalb des Bereiches der beiden Handgriffe (4, 5). Durch Loslassen des einen Handgriffes ist er (4) schaltbar. Im Bereich des einen Handgriffes (5) ist eine Schnellstopeinrichtung (21, 25, 26) angeordnet, welche mittels einer die Handgriffe haltenden Hand betätigbar ist, um den Mäher bei laufendem Antriebsmotor anzuhalten. Längs des Handgriffs ist ein durch die Hand erfassbarer Hand-Schwenkhebel (21) angeordnet, der mittels Uebertragungselementen (22, 25, 26, 8, 15, 16) auf den Verstellmechanismus (14) des Hydrostatantriebes (13) wirkt, um dieses abzuschalten. Beim Hydrostatantrieb fällt das Aus- und Einkuppeln, d.h. das mechanische Getriebe weg. Nebst dem Gashebel wird die Geschwindigkeit für "Vorwärts-Rückwärtsfahrt" sowie "Anhalten und Abfahren" ausschliesslich mit einem Verstellhebel gesteuert. Wenn der Motor-Handmäher auf ein plötzlich auftauchendes Hindernis zusteuert, so kann nun die den Mäher bedienende Person den Mäher dadurch zum Stillstand bringen, dass sie mit der einen Hand eine Schnellstoppeinrichtung (22, 25, 26) erfasst, welcher den Antrieb abschaltet, ohne dass darunter die Führung des Mähers leidet.

FIG. 1

EP 0 204 173 A1

- 1 -

Motor-Handmäher

Die vorliegende Erfindung betrifft einen Motor-Handmäher mit Hydrostatantrieb, dessen Lenkrahmen mittels zweier Handgriffe geführt ist, wobei ein auf den Hydrostatantrieb wirkendes Hand-Schaltorgan mit den Stellungen "Vorwärts-Null-Rückwärts" ausserhalb des Bereiches der beiden Handgriffe angeordnet und durch Loslassen des einen Handgriffes schaltbar ist.

Beim Hydrostatantrieb fällt das Aus- und Einkuppeln, d.h. das mechanische Getriebe weg. Nebst dem Gashebel wird die Geschwindigkeit für "Vorwärts-Rückwärtsfahrt" sowie "Anhalten und Abfahren" ausschliesslich mit einem Verstellhebel gesteuert. Wenn nun ein derartiger Motor-Handmäher auf ein plötzlich auftauchendes Hindernis zusteuert, so muss die den Mäher bedienende Person den Mäher dadurch zum Stillstand bringen, dass sie mit der einen Hand einen der zwei Handgriffe loslässt, um den Verstellhebel in seine Nullage zu schieben und damit ein Anhalten des Motor-Handmähers zu erwirken. Bei dieser Nullage des Verstellhebels wird der Hydrostatantrieb abgeschaltet, ohne dass indessen der normalerweise als Verbrennungsmotor ausgebildete Antriebsmotor abgestellt wird.

Es ist für den Bediener äusserst unangenehm, ausgerechnet in einem kritischen Moment den Motor-Handmäher nur noch mit einer Hand zu führen, um mit der anderen den Verstellhebel zwecks Ausschaltung des Hydrostatantriebes zu betätigen.

Die·vorliegende Erfindung bezweckt die Schaffung einer Schnellstopeinrichtung für den Hydrostatantrieb, welcher betätigbar ist, ohne dass einer der Handgriffe des Lenkrahmens losgelassen werden muss.

Diese Aufgabe wird dadurch gelöst, dass im Bereich mindestens eines der beiden Handgriffe eine Schnellstopeinrichtung angeordnet ist, welche mittels einer die Handgriffe weiterhin haltenden Hand betätigbar ist, um den Mäher bei laufendem Antriebsmotor anzuhalten.

Ein Ausführungsbeispiel des Erfindungsgegenstandes wird anschliessend anhand einer Zeichnung erläutert.

Es zeigen in rein schematischer Darstellung:

Fig. 1    eine Aufsicht auf den hinteren Teil eines Motor-Handmähers,

Fig. 2    die Anordnung gemäss Fig. 1, in Seitenansicht.

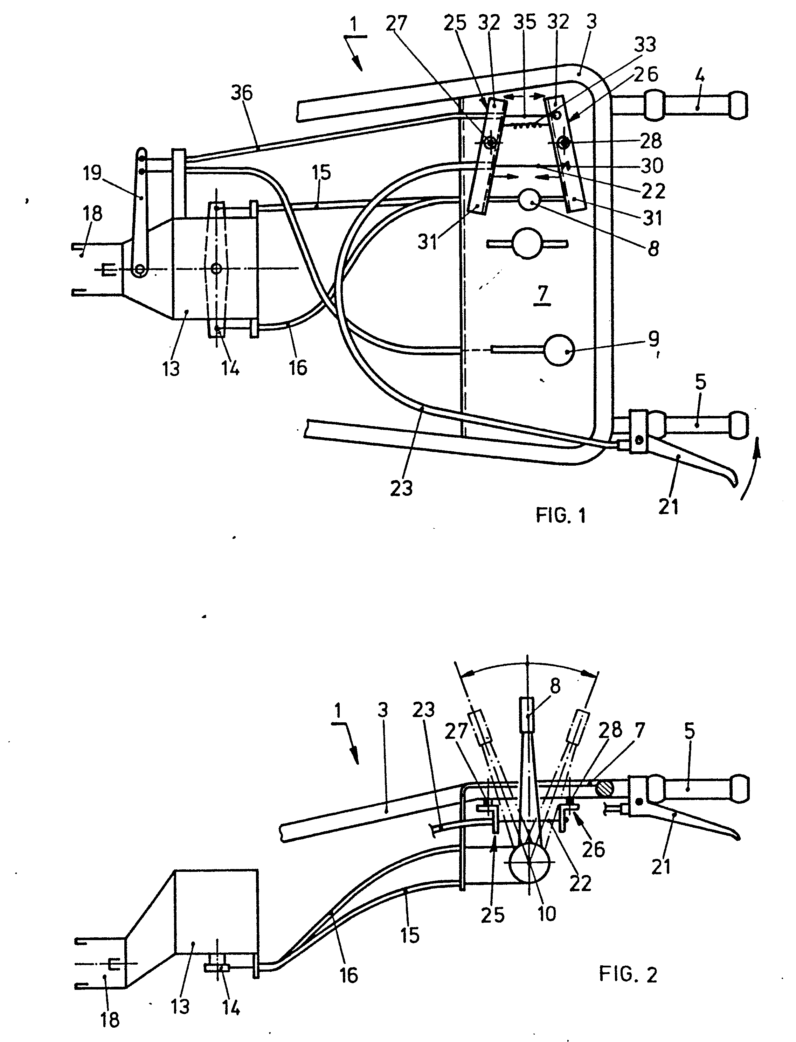

Die Fig. 1 und 2 zeigen den Hinterteil 1 eines Motor-Handmähers. Dieser ist mittels eines Lenkrahmens 3 mit zwei Handgriffen 4 und 5 führbar. An der hinteren Strebe des Lenkrahmens 3 befindet sich ein Armaturenblech 7 mit einem Schalthebel 8 zum Vorwärts/Rückwärtsschalten des Hydrostatantriebes und mit einem Schalthebel 9 zum Zu- und Abschalten des Zapfwellenantriebes. Der Schalthebel 8 ist in einem Schwenklager 10 schwenkbar gelagert. Ferner befindet sich am rechten Handgriff ein Gashebel für den Antriebs-Verbrennungsmotor (nicht dargestellt). Ein von diesem Motor angetriebener Hydrostatantrieb 13 ist mit einem Steuerhebel 14 versehen, welcher mittels zweier Zugkabel, 15 und 16 in die Extremlagen vorwärts und rückwärts sowie in die in Fig. 1 ersichtliche Mittellage, die Nullage, steuerbar ist. Der Antriebsmotor dient ferner direkt dem Antrieb des Mähbalkens über einen Zapfwellenantrieb 80, dessen Steuerhebel 19 ebenfalls ersichtlich ist.

Am linken Handgriff ist ein Handschwenkhebel 21 befestigt, mittels welchem ein Zugkabel 22, das sich in einer Kabelführung 23 befindet, bewegt werden kann. Das Zugkabel ist mit zwei Schwenkhebeln 25 und 26 verbunden, welche Hebel je in einem Lagerzapfen 27 bzw. 28 schwenkbar gelagert sind. Das Zugkabel 22 ist im Punkt 30, z.B. mittels eines Lötnippels befestigt. Die Kabelführung 23 steht, wie gezeichnet, am Schwenkhebel 25 an. Die beiden Schwenkhebel 25 und 26 sind mit den längeren Armen 31 und den kürzeren Armen 32 als zweiarmige Hebel ausgebildet. Zwischen den beiden kürzeren Armen 32 befindet sich eine Zugfeder 33, welche bestrebt ist, die Schwenkhebel 25 und 26 mit den Armen 31 in ihre ausgeschwenkte Lage zu ziehen, wie dies Fig. 1 zeigt. An den Armen 32 ist ein weiteres Zugkabel 35 befestigt, das in einer Kabelführung 36 läuft und dessen anderes Ende am Steuerhebel 19 für den Zapfwellenantrieb 18 endet.

Wenn nun während des Mähvorganges plötzlich vor dem Mähbalken ein Hindernis auftaucht, so kann der Mähende, ohne die Handgriffe 4 und 5 loszulassen, den Handschwenkhebel 21 erfassen und ihn betätigen, worauf die beiden Schwenkhebel 25 und 26, um ihre Lagerzapfen 27 und 28 schwenkend, eine Zangenbewegung ausführen und damit den sich normalerweise in seiner Vorwärtslage befindenden Schalthebel 8 in die Mittellage, d.h. seine Nullage, zurückführen, in welcher der Hydrostat-Antrieb abgeschaltet ist, worauf der Mäher unverzüglich stillsteht. Auf diese Weise ist es möglich, ohne die Führung des Motor-Handmähers durch Loslassen eines Handgriffes zwecks Betätigung des Schalthebels 8 zu verunsichern, durch Ziehen des Handschwenkhebels 21 die Gefahr einer Kollision zu verhüten.

Das gleiche Manöver wird beim Auftauchen eines Hindernisses beim Rückwärtsfahren durchgeführt.

Durch die Zangenbewegung und Schliessen der Arme 31 sowie das Erfassen des Schalthebels 8 werden die Arme 32 gespreizt, so dass der Arm des Schwenkhebels 26 das Zugkabel 35 betätigt und dadurch den Steuerhebel 19 zum Zapfwellenantrieb 18 im Uhrzeigersinn (Fig. 1) verschwenkt. Damit wird auch der Zapfwellenantrieb 18 stillgesetzt bzw. vom Antriebs-Motor abgekuppelt.

Mit dem Abschalten des Fahrantriebes, d.h. des Hydrostatantriebes 13 kann zugleich eine Bremsung dieses
Antriebes des Mähwerks erfolgen.

Patentansprüche:

1. Motor-Handmäher mit Hydrostatantrieb (13), dessen Lenkrahmen (3) mittels zweier Handgriffe (4, 5) geführt ist, wobei ein auf den Hydrostatantrieb (13) wirkendes Hand-Schaltorgan (8) mit den Stellungen "Vorwärts-Null-Rückwärts" ausserhalb des Bereiches der beiden Handgriffe (4, 5) angeordnet und durch Loslassen des einen Handgriffes (4) schaltbar ist, dadurch gekennzeichnet, dass im Bereich mindestens eines der beiden Handgriffe (4, 5) eine Schnellstopeinrichtung (21, 25, 26) angeordnet ist, welche mittels einer die Handgriffe haltenden Hand betätigbar ist, um den Mäher bei laufendem Antriebsmotor anzuhalten.

2. Motor-Handmäher, vorzugsweise nach mindestens einem der Ansprüche, dadurch gekennzeichnet, dass längs des Handgriffs ein durch die Hand erfassbarer Hand-Schwenkhebel (21) angeordnet ist, der mittels Uebertragungselementen (22, 25, 26, 8, 15, 16) auf den Verstellmechanismus (14) des Hydrostatantriebes (13) wirkt.

3. Motor-Handmäher, vorzugsweise nach mindestens einem der Ansprüche, dadurch gekennzeichnet, dass die Uebertragungselemente mindestens ein Zugkabel (22) mit Kabelführung (23) umfassen.

4. Motor-Handmäher, vorzugsweise nach mindestens einem der Ansprüche, dadurch gekennzeichnet, dass zwei mit dem Zugkabel (22) wirkverbundene Schwenkhebel (25, 26) angeordnet sind, welche beim Betätigen des Zugkabels (22) das vorzugsweise als Hebel ausgebildete Schaltorgan (8) in seine Nullage bringen.

5. Motor-Handmäher, vorzugsweise nach mindestens einem der Ansprüche, dadurch gekennzeichnet, dass die beiden Schwenkachsenpunkte (27, 28) der Schwenkhebel und der Mittelpunkt des Schalthebels (8) ein gleichschenkliges, gegebenenfalls ein gleichseitiges Dreieck festlegen. (Fig. 1)

6. Motor-Handmäher, vorzugsweise nach mindestens einem der Ansprüche, dadurch gekennzeichnet, dass die Schwenkhebel (25, 26) doppelarmig ausgebildet sind, wobei die einen Arme (31, 31) zum Verschieben des Schalthebels (8) und die andern (32, 32) zur Aufnahme mindestens einer sie verbindenden Zugfeder (33) vorgesehen sind.

7. Motor-Handmäher, vorzugsweise nach mindestens einem der Ansprüche, dadurch gekennzeichnet, dass der eine Schwenkhebel (26) über ein weiteres Zugkabel (35) mit einem Steuerhebel (19) für das Zu- und Abschalten des Zapfwellenantriebes (18) versehen ist, welcher (26) beim Schwenken des Schalthebels (8) in seine Nullage den Zapfwellenantrieb (18) gleichzeitig abschaltet.

FIG. 1

FIG. 2

0204173

Europäisches
Patentamt

**EUROPÄISCHER RECHERCHENBERICHT**

0204173
Nummer der Anmeldung

EP 86 10 6324

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | CH-A- 607 699 (LèéND-SCHMIDIG) <br> * Insgesamt * <br> --- | 1-3 | A 01 D 34/08 <br> A 01 B 69/00 <br> G 05 G 11/00 |
| Y | FR-A- 992 839 (GUTBROD) <br> * Figuren 1-3; Seite 1, rechte Spalte, Zeile 37 - Seite 2, linke Spalte 2, Zeile 41 * <br> --- | 1-3 | |
| A | US-A-3 618 718 (BLAAUW) <br> * Figur 5; Spalte 2, Zeile 63 - Spalte 3, Zeile 30 * <br> --- | 1 | |
| A | EP-A-0 097 369 (DEERE & CO.) <br> * Figuren 1-3; Zusammenfassung * <br> ----- | 1 | |
| | | | **RECHERCHIERTE SACHGEBIETE (Int Cl 4)** <br><br> A 01 D <br> A 01 B <br> B 62 D <br> G 05 G |

Der vorliegende Recherchenbericht wurde für alle Patentansprüche erstellt

| Recherchenort | Abschlußdatum der Recherche | Prüfer |
|---|---|---|
| DEN HAAG | 11-09-1986 | DISSEN H.D. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82